# EUROPÄISCHE PATENTANMELDUNG

(11) **EP 1 211 619 A2**
(43) Veröffentlichungstag der Anmeldung: **05.06.2002**
(21) Anmeldenummer: 01000670.8
(22) Anmeldetag: 28.11.2001
(51) Int. Cl.: G06F 17/60

(54) **Verfahren und Vorrichtung zur mobilen Überwachung eines Interaktions-Dienstleistungszentrums**

(30) Priorität: 29.11.2000 DE 10059326
(71) Anmelder: SIEMENS AKTIENGESELLSCHAFT, 80333 München (DE)
(72) Erfinder: Drobel, Erich, 82008 Unterhaching (DE); Schliwa, Alexander, 85716 Unterschleissheim (DE)
(74) Vertreter: Wiedemann, Albert, Dipl.-Ing. (FH)

(57) **Zusammenfassung**

Verfahren und Vorrichtung zur mobilen Überwachung eines Interaktions-Dienstleistungszentrums (Contact Center), mit einer zentralen Anlage 1 und einer Vielzahl von Endgeräten 3 - 6 Anfragen bearbeitender Agenten, wobei die Überwachung durch einen Supervisor mittels einer mobilen Kommunikationseinheit 7 erfolgt.

## Beschreibung

Die Erfindung betrifft ein Verfahren und eine Vorrichtung zur mobilen Überwachung eines Interaktions-Dienstleistungszentrums (Contact Center) gemäß dem Oberbegriff des Anspruchs 1.

Interaktions-Dienstleistungszentren (Contact Center) ermöglichen eine hohe inhaltliche Qualität der Dienstleistung bei optimierten Kosten. Dabei sind für einen Kunden neben der reinen Dienstleistung Faktoren wie Wartezeit ausschlaggebend für die subjektive Qualität des Contact Center. Der Begriff Interaktions-Dienstleistungszentrum wird als Oberbegriff umfassend beispielsweise reine telefonische Dienstleistungszentren (Call Center) verwendet, wobei Contact Center auf beliebigem Wege beispielsweise per Email, SMS, Telefon oder über das Internet mit Kunden interagieren.

Mehrere Einflüsse erhöhen die Komplexität einer Verwaltung des Contact Center soweit, dass eine Überwachung des Contact Center durch einen Supervisor notwendig ist. Beispielsweise variiert die Zahl der Anfragen oder die Zahl der die Anfragen bearbeitenden Agenten im Contact Center zeitlich unvorhersehbar, zudem werden die Agenten in Gruppen und zusätzlich in verschiedene Dienstleistungsebenen aufgeteilt.

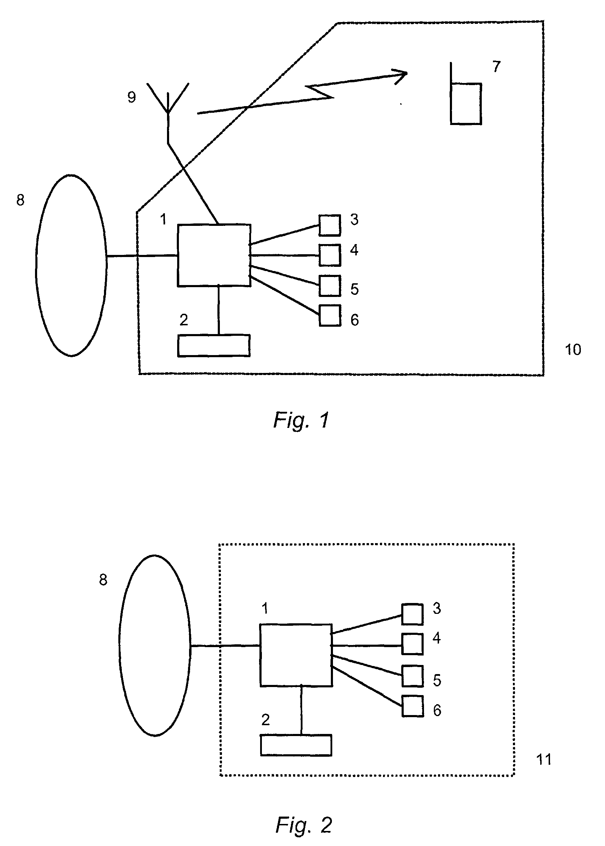

In einem herkömmlichen Contact Center 11 werden, wie in Fig. 2 dargestellt, Anfragen aus dem Netz 8 durch eine zentrale Anlage 1 an Endgeräte 3 - 6 der bearbeitenden Agenten weitergeleitet. Die Anlage 1 verwaltet alle eingehenden Anfragen, erfasst Dauer und Eigenschaften einzelner Anfragen und führt statistische Auswertungen beispielsweise der Wartezeit oder der Abbruchrate durch. Überwacht und gegebenenfalls gesteuert wird das Contact Center 11 von einem Supervisor an einer Überwachungseinheit 2, auf der die erfassten oder ausgewerteten Daten aus dem Contact Center 11 angezeigt werden.

Ist das Contact Center 11 und seine Verwaltung bereits optimiert, so muss der Supervisor es nicht ständig überwachen. Er steht mit einem Teil seiner Arbeitszeit für andere Aufgaben zur Verfügung, muss aber in regelmäßigen Abständen den aktuellen Zustand im Contact Center 11 an der Überwachungseinheit 2 überprüfen.

Aufgabe der vorliegenden Erfindung ist es, ein Verfahren und eine Vorrichtung in einem Contact Center so zu gestalten, dass ein Supervisor unabhängig von seinen Überwachungs- und Steuerungsaufgaben für andere Aufgaben einsetzbar ist.

Diese Aufgabe wird erfindungsgemäß durch ein Verfahren gemäß Anspruch 1 und eine Vorrichtung gemäß Anspruch 11 gelöst. Die Unteransprüche beschreiben bevorzugte Ausführungsformen der Erfindung.

Gemäß der Erfindung werden in einem Interaktions-Dienstleistungszentrum (Contact Center), in dem unter Verwaltung einer zentralen Anlage zumindest eine Person (Agent) Anfragen bearbeitet werden, Daten erfasst, welche die Bearbeitung oder die Verwaltung der Bearbeitung betreffen, die erfassten Daten auf einer mobilen Kommunikationseinheit angezeigt und die angezeigten Daten von einem Supervisor überwacht. Erfindungsgemäß umfasst eine Vorrichtung in einem Contact Center zumindest ein Endgerät eines Anfragen bearbeitenden Agenten, eine zentrale Anlage, die das Bearbeiten der Anfragen verwaltet, eine mobile Kommunikationseinheit, die Verwaltungs-, Bearbeitungsdaten oder daraus abgeleitete Daten zur Überwachung durch den Supervisor anzeigt, und eine Einheit, die Daten für die mobile Kommunikationseinheit überträgt. Durch das erfindungsgemäße Verfahren oder die erfindungsgemäße Vorrichtung ist der Supervisor nicht mehr an einen bestimmten Arbeitsplatz gebunden.

Gemäß einer bevorzugten Ausgestaltung des Verfahrens wird aus den erfassten Daten eine Kontrollinformation erstellt, die auf der mobilen Kommunikationseinheit angezeigt wird. Durch die Reduktion der zu überwachenden Informationen wird dem Supervisor die Überwachung erleichtert.

Gemäß einer weiteren bevorzugten Ausgestaltung des Verfahrens wird die Kontrollinformation zu der mobilen Kommunikationseinheit übertragen, wodurch die zu übertragende Menge an Informationen reduziert und eine Erstellung in der mobilen Kommunikationseinheit vermieden wird.

Vorzugsweise wird die Bearbeitung oder die Verwaltung der Bearbeitung durch den Supervisor über die mobile Kommunikationseinheit gesteuert. Somit kann der Supervisor wenn nötig, von jedem Ort in die Abläufe im Contact Center eingreifen.

Gemäß einer weiteren bevorzugten Ausgestaltung des Verfahrens wird die Kontrollinformation an die mobile Kommunikationseinheit übertragen, wenn ein entsprechendes Kriterium erfüllt ist. Durch die richtige Wahl des Kriteriums kann ein kritischer Zustand so rechtzeitig dem Supervisor übertragen werden, dass der Supervisor rechtzeitig vor den potenziellen Folgen gegensteuern kann.

Besonders zweckmäßig ist es, dem Supervisor die erfassten Daten oder die Kontrollinformation zusätzlich durch eine stationäre Einheit anzuzeigen, da die mobile Kommunikationseinheit somit technisch kein vollständiger Ersatz der stationären Einheit sein muss. Dadurch kann in der mobilen Kommunikationseinheit die Kontrollinformation auf ein notwendiges Maß reduziert werden, ohne die Überwachungs- und Steuerungsmöglichkeiten einzugrenzen.

Die Erfindung wird im Folgenden unter Bezug auf die angefügten Zeichnungen anhand bevorzugter Ausführungsformen beschrieben. Die angefügten Zeichnungen zeigen im Einzelnen:
- Fig. 1: eine schematische Darstellung einer erfindungsgemäßen Vorrichtung,
- Fig. 2: eine schematische Darstellung eines herkömmlichen Interaktions-Dienstleistungszentrum.

In Fig. 1 ist ein Interaktions-Dienstleistungszentrum (Contact Center) 10 mit einer zentralen Anlage 1, einer stationären Überwachungseinheit 2, Endgeräten 3 - 6 und einer mobilen Überwachungseinheit 7 dargestellt. Die zentrale Anlage 1 ist mit dem Netz 8 und der Übertragungseinheit 9 verbunden. Das Contact Center 10 erhält eine Anfrage aus dem Netz 8, der in der zentralen Anlage 1 zu einem freien Agenten an dessen Endgerät 3 - 6 vermittelt wird. Die Anfrage wird dann von dem Agenten bearbeitet. Die Agenten und ihre Endgeräte 3 - 6 können nach Art oder Qualität der Dienstleistung in Gruppen und zusätzlich in Dienstleistungsebenen aufgeteilt sein.

Die zentrale Anlage 1 erfasst alle Daten im Contact Center 10, welche die Bearbeitung der Anfragen oder eine Verwaltung der Bearbeitung betreffen und wertet diese zu einer Kontrollinformation aus. Die Kontrollinformation wird auf der stationären Überwachungseinheit 2 für einen Supervisor dargestellt. Dem Supervisor wird die Kontrollinformation auch über die Übertragungseinheit 9 drahtlos zu einer mobilen Kommunikationseinheit 7 übertragen, auf der sie ebenfalls dargestellt werden. Die Übertragungseinheit 9 kann dabei beispielsweise eine lokale Mobiltelefonanlage oder eine Schnittstelle zum öffentlichen Mobilfunknetz sein.

Der Supervisor kann anhand der dargestellten Kontrollinformation über die mobile Kommunikationseinheit 7 steuernd im Contact Center eingreifen. Auf eine erhöhte Anfragenzahl für eine Gruppe kann er beispielsweise reagieren indem er eine Nachricht an einen Agenten oder den entsprechenden Gruppenleiter sendet, um einen Agenten kurzzeitig aus einer Gruppe in eine andere umzugruppieren, oder indem er die Agenten einer Gruppe benachrichtigt die Anfragen möglichst schnell zu bearbeiten.

Weiterhin hat der Supervisor über die mobile Kommunikationseinheit 7 die Möglichkeit, einzelne Anfragen mit zu verfolgen beispielsweise Anrufe mitzuhören, die Bearbeitung zu verfolgen, Nachrichten mit den Agenten oder Gruppen auszutauschen, einzelne Agenten aus einer Gruppe herauszulösen, oder zusätzliche Agenten anzufordern.

Der mobilen Kommunikationseinheit 7 können erfasste Daten oder die Kontrollinformation auf Anforderung durch den Supervisor, in regelmäßigen zeitlichen Abständen oder beim Erreichen kritischer Werte für die Kontrollinformation oder erfasste Daten (Kriterien) übertragen werden, oder aber für die letzten beiden Methoden auch nur signalisiert werden. Diese Ausführungsformen können auch in Kombination miteinander verwendet werden.

Die Kontrollinformation wird allgemein in der zentralen Anlage 1 oder der stationären Überwachungseinheit 2 erstellt. Der Supervisor erstellt aber bei Bedarf auch die Kontrollinformation auf seiner mobilen Kommunikationseinheit 7 und kann somit flexibel auf unvorhersehbare Situationen reagieren.

Die Kontrollinformation kann beispielsweise sein: Anzahl der Anfragen in einer Warteschlange, Abbruchrate der Anfragen, durchschnittliche Abbruchrate, durchschnittliche Wartezeit, Anzahl der Anfragen mit Zeitüberschreitung, älteste Anfrage, Übersicht über Zustand der Agenten (frei, bearbeitet, bearbeitet nach, Pause ...), Agentenübersicht, Kurzzeitstatistiken, Abweichungen von Normwerten.

Als mobile Kommunikationseinheit 7 ist jede mobile rechnergesteuerte Einheit mit Darstellungsmöglichkeit denkbar, beispielsweise Pager, Mobiltelefon, persönlicher digitaler Assistent oder tragbarer Rechner. Entsprechend einer Ausgestaltung der mobilen Kommunikationseinheit 7 werden die erfassten Daten und die Kontrollinformation als reine Daten, Sprach-, Text- oder Bildinformationen übertragen. Für ein Mobiltelefon ist beispielsweise die Übertragung durch eine Kurznachricht (SMS) oder der Abruf über WAP möglich.

Die zu bearbeitenden Anfragen können beispielsweise über das Internet, ein öffentliches Telefonnetz oder ein Mobilfunknetz eingehen. Die zentrale Anlage 1 kann unter Berücksichtigung IP-basierten Telefonierens beispielsweise aufgeteilt werden in eine Vermittlungseinheit, eine Auswertungseinheit, einen CTI-Server, ein lokales Netzwerk, Rechner der Agenten, ein lokales Mobiltelefonnetz und eine Kundendatenbank.

## Patentansprüche

1. Verfahren in einem Interaktions-Dienstleistungszentrum (Contact Center) (10), wobei unter Verwaltung einer zentralen Anlage (1) zumindest eine Person (Agent) Anfragen bearbeitet, mit folgenden Schritten:
Erfassen von Daten, welche die Bearbeitung der Anfragen oder die Verwaltung der Bearbeitung betreffen;
Anzeigen der erfassten Daten;
Überwachen der angezeigten Daten durch eine weitere Person (Supervisor) ;
**dadurch gekennzeichnet, dass**
die Daten dem Supervisor durch eine mobile Kommunikationseinheit (7) angezeigt werden.

2. Verfahren nach Anspruch 1 **dadurch gekennzeichnet, dass** aus den erfassten Daten eine Kontrollinformation erstellt wird, die in der mobilen Kommunikationseinheit (7) angezeigt wird.

3. Verfahren nach Anspruch 2 **dadurch gekennzeichnet, dass** die Kontrollinformation zu der mobilen Kommunikationseinheit (7) übertragen wird.

4. Verfahren nach Anspruch 2 **dadurch gekennzeichnet, dass** zumindest eine Auswahl der erfassten Daten zu der mobilen Kommunikationseinheit (7) übertragen wird; und das Erstellen der Kontrollinformation in der mobilen Kommunikationseinheit (7) erfolgt.

5. Verfahren nach einem der Ansprüche 1 bis 4 **dadurch gekennzeichnet, dass** ein Steuern der Bearbeitung oder der Verwaltung durch den Supervisor über die mobile Kommunikationseinheit (7) erfolgt.

6. Verfahren nach einem der Ansprüche 3 oder 4 **dadurch gekennzeichnet, dass** das Übertragen zu der mobilen Kommunikationseinheit (7) drahtlos erfolgt.

7. Verfahren nach einem der Ansprüche 2 bis 6 **dadurch gekennzeichnet, dass** dem Supervisor die erfassten Daten oder die Kontrollinformation zusätzlich durch eine stationäre Einheit (2) angezeigt werden.

8. Verfahren nach einem der Ansprüche 2 bis 7 **dadurch gekennzeichnet, dass** eine Kontrollinformation die im Contact Center verfügbare Zahl der Agenten ist.

9. Verfahren nach einem der Ansprüche 3 bis 8 **dadurch gekennzeichnet, dass** das Übertragen zu der mobilen Kommunikationseinheit (7) auf Anforderung erfolgt.

10. Verfahren nach einem der Ansprüche 3 bis 9 **dadurch gekennzeichnet, dass** das Übertragen zu der mobilen Kommunikationseinheit (7) erfolgt, wenn die erfassten Daten oder die Kontrollinformation ein entsprechendes Kriterium erfüllen.

11. Vorrichtung in einem Interaktions-Dienstleistungszentrum (Contact Center), mit:
zumindest einem Endgerät (3 - 6) eines Agenten, der Anfragen bearbeitet;
einer zentralen Anlage (1), die das Bearbeiten der Anfragen verwaltet;
einer Überwachungseinheit, die Verwaltungs-, Bearbeitungsdaten oder daraus abgeleitete Daten für den Supervisor anzeigt;
**dadurch gekennzeichnet, dass**:
die Überwachungseinheit eine mobile Kommunikationseinheit (7) ist; und
die Vorrichtung weiterhin eine Einheit (9) umfasst, die Daten für die mobile Kommunikationseinheit (7) überträgt.

12. Vorrichtung nach Anspruch 11, die zumindest eines der Verfahren nach Anspruch 1 bis 10 umsetzt.
